# EUROPEAN PATENT APPLICATION

(11) **EP 3 482 650 A1**
(43) Date of publication of application: **15.05.2019**
(21) Application number: 18173276.9
(22) Date of filing: 18.05.2018
(51) Int. Cl.: A45C 15/00, A45C 15/04, A45D 33/00, A45D 33/20, A45D 33/26, A45D 40/18, A45C 11/00

(54) **COSMETICS CASE**

(30) Priority: 10.11.2017 KR 20170149602
(71) Applicant: Intops. Co., Ltd., Anyang-si, Gyeonggi-do 14088 (KR); Kim, Keun Ha, Anyang-si, Gyeonggi-do 14088 (KR)
(72) Inventor: KIM, Keun Ha, 14088 Gyeonggi-Do (KR); PARK, Jong Seung, 14088 Gyeonggi-Do (KR); CHOI, Jung Ah, 14088 Gyeonggi-Do (KR)
(74) Representative: Brevalex

(57) **Abstract**

A cosmetics case includes a lower member including an adhesive surface on a lower surface thereof for attachment to a side of a cellular phone or a case of the cellular phone and an accommodation space provided in one side of an upper surface thereof to accommodate a cosmetic product; and an upper member placed on an upper portion of the lower member and configured to selectively slide in a direction opposite the one side to open the accommodation space provided in the one side of the lower member. The cosmetics case further includes a mirror and is configured to be mounted on a side of a cellular phone or a cellular phone case.

## Description

### CROSS-REFERENCE TO RELATED APPLICATION

This application claims the benefit of Korean Patent Application No. 10-2017-0149602, filed on November 10, 2017, in the Korean Intellectual Property Office, the disclosure of which is incorporated herein in its entirety by reference.

### BACKGROUND

### 1. Field

One or more embodiments relate to a cosmetics case, and more particularly, to a cosmetics case configured to be mounted on a side of a cellular phone or a cellular phone case to decorate the cellular phone and selectively provide a mirror and cosmetics for a user.

### 2. Description of the Related Art

In general, women who use cellular phones also carry cosmetics separately in handbags, thereby having to carry large handbags and having the inconvenience of always carrying handbags for makeup.

To address these problems, cellular phone cases capable of storing cosmetics have been proposed as disclosed in Korean Utility Model Publication No. 20-0474066 ("Cellular Phone Storing Cosmetics") and Korean Patent Application Publication No. 10-2009-0014092 ("Mobile Phone Having Means for Storing Cosmetics").

The cellular phone capable of storing cosmetics according to the related art includes a cosmetics case having a plurality of accommodation recesses; cosmetics contained in the accommodation recesses; a guide portion having a certain height and extending along an upper surface of the cosmetics case to allow a main body to slide upward/downward; and the main body inserted in the guide portion and configured to be slid upward/downward to open and close the cosmetics case, the main body having a communication function.

In addition, the mobile phone having means for storing cosmetics according to the related art includes a means for containing cosmetics on a main body of the mobile phone, wherein the means for containing cosmetics is provided in one piece with the main body or separable from the main body. When the means for containing cosmetics is provided in one piece with the main body, the cosmetics container includes a refill container for refilling cosmetics.

However, in the case of such cellular phone cosmetics cases, cosmetics cannot be individually replaced because the cosmetics are filled in recesses of a case, and additional cosmetics may be necessary for color makeup because cosmetics having the same colors only are provided.

### SUMMARY

One or more embodiments include a cosmetics case including a mirror and configured to be mounted on a surface of a cellular phone or a cellular phone case, thereby removing the inconvenience of separately carrying cosmetics or a mirror in addition to a cellular phone, improving assemblability and productivity owing to a simple structure of the cosmetics case, markedly decreasing the product cost of the cosmetics case because the use of labor is reduced in assembly processes, and enabling the cosmetics case to have a compact structure such that even though the overall size of the cosmetics case is small, the cosmetics case is capable of providing a mirror and cosmetics.

Additional aspects will be set forth in part in the description which follows and, in part, will be apparent from the description, or may be learned by practice of the presented embodiments.

According to one or more embodiments, a cosmetics case includes: a lower member including an adhesive surface on a lower surface thereof for attachment to a side of a cellular phone or a case of the cellular phone, and an accommodation space provided in one side of an upper surface thereof to accommodate a cosmetic product; and an upper member placed on an upper portion of the lower member and configured to selectively slide in a direction opposite the one side to open the accommodation space provided in the one side of the lower member.

The upper member may include: a mirror provided on an upper surface of the upper member; a nipple protruding downward from a center portion of a lower surface of the upper member; and a pair of guide portions parallelly protruding from left and right sides of the nipple at a distance from each other.

The lower member may further include: a long coupling slot formed in a center portion of the other side of the upper surface of the lower member for coupling with the nipple and guiding the nipple in a length direction of the lower member; a spring provided in the long coupling slot with ends of the spring placed at lengthwise ends of the long coupling slot, the spring being configured to regulate movement of the nipple by elasticity of the spring; and a pair of long guide slots parallelly provided at left and right sides of the long coupling slot, the guide portions of the upper member being respectively coupled to the long guide slots at corresponding positions.

The lower member may further include a stand provided along a circumference of a side of the lower member and having ends rotatably coupled to central left and right sides of the lower member based on a length of the lower member, the stand being configured to be selectively rotated on the left and right sides in a direction outward from the lower member to support the cellular phone.

The upper member may include a decorative character member selectively provided around the upper member.

### BRIEF DESCRIPTION OF THE DRAWINGS

These and/or other aspects will become apparent and more readily appreciated from the following description of the embodiments, taken in conjunction with the accompanying drawings in which:
FIG. 1 is an exploded perspective view illustrating a configuration of a cosmetics case according to an embodiment;
FIG. 2 is an example view illustrating an operational state of the cosmetics case according to an embodiment;
FIG. 3 is an example view illustrating a state of using a stand of the cosmetics case according to an embodiment; and
FIG. 4 is an example view illustrating a character member provided on the cosmetics case according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

Hereinafter, embodiments will be described with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In addition, the configurations described in the following description with reference the accompanying drawings do not represent all technical concepts or ideas of the present disclosure but should be considered to be example embodiments of the present disclosure. It should be understood that various modifications and equivalents of the embodiments can be devised within the spirit and scope of the present disclosure at the time of the filling of the application.

The present disclosure relates to a cosmetics case including a mirror and configured to be mounted on a surface of a cellular phone or a cellular phone case to remove the inconvenience of carrying cosmetics or a mirror together with a cellular phone, and embodiments of the present disclosure will now be described with reference to the accompanying drawings.

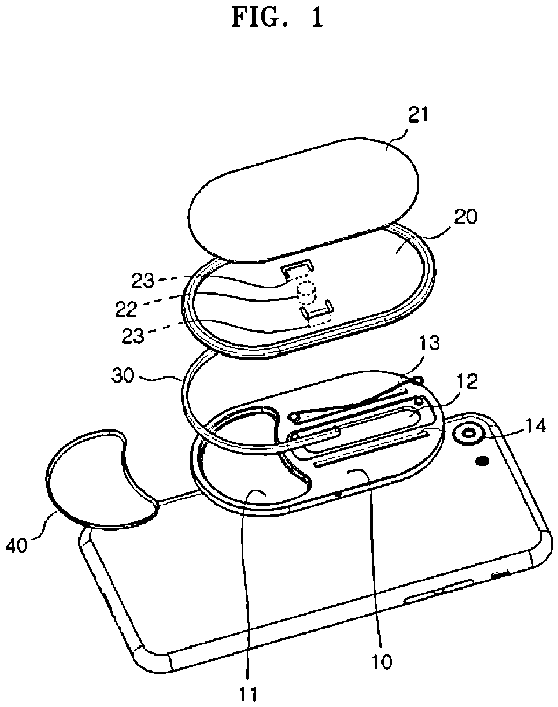

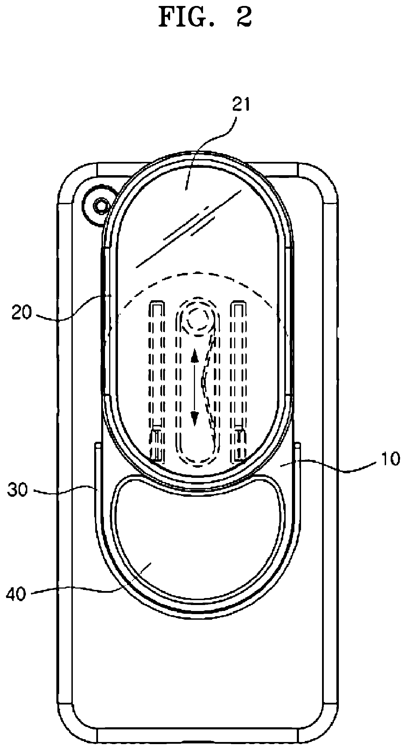

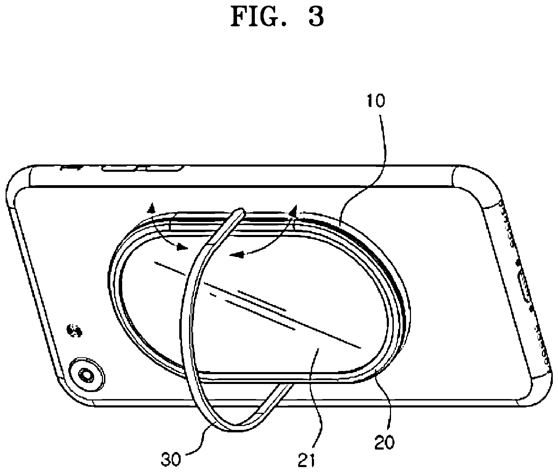

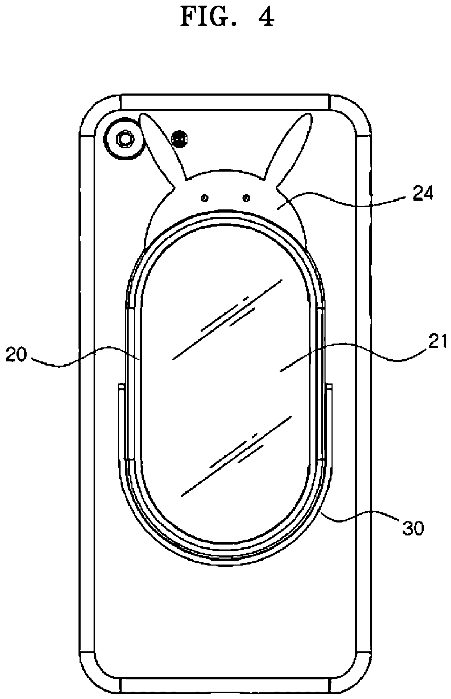

Referring to FIGS. 1 to 4, a cosmetics case according to an embodiment includes a lower member 10 and an upper member 20. The lower member 10 includes: an adhesive surface provided on a lower surface of the lower member 10 so as to be attached to a side of a cellular phone; and an accommodation space 11 provided in one side of an upper surface of the lower member 10 to accommodate cosmetics.

In addition, the upper member 20 is provided on an upper portion of the lower member 10 and is configured to selectively slide in a direction opposite the one side to open the accommodation space 11 formed in the one side of the lower member 10.

In this case, each of the lower member 10 and the upper member 20 has a plate shape. In an embodiment, each of the lower member 10 and the upper member 20 has an elliptical plate shape. However, the lower member 10 and the upper member 20 are not limited thereto, and may have various shapes such as a polygonal shape or a circular shape. In addition, the accommodation space 11 of the lower member 10 may also have various shapes, and an inner case 40 for storing a cosmetic product such as eyeshadow or lipgloss is placed in the accommodation space 11.

In addition, a metal piece is provided on a lower surface of the inner case 40, and a magnetic material magnetically corresponding to the metal piece is provided in a bottom surface of the accommodation space 11, such that the inner case 40 may be freely attached to the accommodation space 11 and detached from the accommodation space 11. Therefore, a user may use another cosmetic product according to his/her preference by replacing the inner case 40 with another one.

According to an embodiment, the lower member 10 and the upper member 20 are configured as follows. The upper member 20 having a plate shape as a whole includes a mirror 21 on an upper surface thereof such that a user may look at himself/herself in the mirror 21 while applying makeup, and a circular nipple 22 protrudes downward from a center portion of a lower surface of the upper member 20.

In addition, a pair of guide portions 23 parallelly protrude from left and right sides of the nipple 22 at a distance from each other, and the upper member 20 may include a decorative character member 24 selectively provided around the upper member 20.

In this case, the character member 24 may be selectively attached to a side of the upper member 20 and detached from the side of the upper member 20 via a magnetic material or a combination of an insertion protrusion and an insertion groove.

Furthermore, in an embodiment, the character member 24 may be selectively attached. However, the character member 24 is not limited thereto. In another embodiment, the character member 24 may extend from a side of the upper member 20 in one piece with the upper member 20.

The lower member 10, which is placed under the upper member 20, may include a long coupling slot 12 formed in a center portion of the other side of the upper surface of the lower member 10 in a length direction, such that the nipple 22 of the upper member 20 may be coupled to the long coupling slot 12 and guided in the length direction along the long coupling slot 12.

In this case, a spring 13 is provided in the long coupling slot 12 with ends thereof placed at lengthwise ends of the long coupling slot 12, so as to regulate the movement of the nipple 22 by the elasticity of the spring 13.

In an embodiment, the spring 13 is a V-type spring. However, the spring 13 is not limited thereto and may be of any type.

The embodiment in which a V-type spring is used will now be described with reference to the accompanying drawings. The spring 13 is provided in a '>'-shape inside the long coupling slot 12 having a '1'-shape, and thus an end of the nipple 22 of the upper member 20 coupled to the long coupling slot 12 is placed in one side or the other side of the long coupling slot 12 due to the elasticity of the spring 13 which is a V-type spring provided in a '>'-shape in the long coupling slot 12. In this case, according to the elasticity of the V-type spring 13, the nipple 22 may be moved to one end or the other end based on a center protrusion portion of the V-type spring 13.

In addition, a pair of long guide slots 14 are parallelly formed in left and right sides of the long coupling slot 12, and the guide portions 23 of the upper member 20 are respectively coupled to the long guide slots 14 at corresponding positions and guided along the long guide slots 14.

Therefore, when a user slightly pushes the upper member 20 in the opposite direction to open the accommodation space 11 of the lower member 10 in which a cosmetic product is contained, the nipple 22 of the upper member 20 is moved along the long coupling slot 12 in the opposite direction over the center protrusion portion of the V-type spring 13 and is then pushed in the opposite direction by the elasticity of the V-type spring 13. Thus, the upper member 20 is pushed to an end in the opposite direction, and the accommodation space 11 provided in the one side of the lower member 10 is opened.

Therefore, the user may use the cosmetic product contained in the opened accommodation space 11 while looking into the mirror 21 provided on the upper surface of the upper member 20.

Thereafter, when the user slightly pushes the upper member 20 in one direction to close the accommodation space 11 of the lower member 10, the nipple 22 of the upper member 20 is moved along the long coupling slot 12 in the one direction over the center protrusion portion of the V-type spring 13 and is then pushed to the one side by the elasticity of the V-type spring 13. Thus, the upper member 20 is pushed to an end in the one direction and placed on the upper portion of the lower member 10, and thus the accommodation space 11 provided in the one side of the lower member 10 is closed.

In addition, a stand 30 having a ⊃-shape is provided along the circumference of a side of the lower member 10, and both ends of the stand 30 are rotatably coupled to central left and right sides of the lower member 10 based on a length of the lower member 10.

Therefore, the stand 30 may be selectively rotated on the sides of the lower member 10 in a direction outward from the lower member 10 to support the cellular phone, and at this time, the stand 30 may form a right angle with the upper member 20.

As described above, according to the one or more of the embodiments, the cosmetics case has the following effects.

First, since the cosmetics case including a mirror is configured to be mounted on a surface of a cellular phone or a cellular phone case, the inconvenience of carrying cosmetics or a mirror together with a cellular phone may be removed.

Secondly, assemblability and productivity of the cosmetics case may be improved owing to a simple structure of the cosmetics case, and the product cost of the cosmetics case may be markedly reduced because the use of labor is reduced in assembly processes. In addition, the cosmetics case has a compact structure and is thus capable of providing a mirror and cosmetics even though the overall size of the cosmetics case is small.

Thirdly, when using cosmetics, the accommodation space containing a cosmetic product may be easily opened by slightly pushing the upper member, thereby enabling quick and convenient makeup and thus improving convenience and makeup speed.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope of the disclosure as defined by the following claims.

## Claims

1. A cosmetics case comprising:
a lower member comprising an adhesive surface on a lower surface thereof for attachment to a side of a cellular phone or a case of the cellular phone, and an accommodation space provided in one side of an upper surface thereof to accommodate a cosmetic product; and
an upper member placed on an upper portion of the lower member and configured to selectively slide in a direction opposite the one side to open the accommodation space provided in the one side of the lower member.

2. The cosmetics case of claim 1, wherein the upper member comprises:
a mirror provided on an upper surface of the upper member;
a nipple protruding downward from a center portion of a lower surface of the upper member; and
a pair of guide portions parallelly protruding from left and right sides of the nipple at a distance from each other.

3. The cosmetics case of claim 2, wherein the lower member further comprises:
a long coupling slot formed in a center portion of the other side of the upper surface of the lower member for coupling with the nipple and guiding the nipple in a length direction of the lower member;
a spring provided in the long coupling slot with ends of the spring placed at lengthwise ends of the long coupling slot and configured to regulate movement of the nipple by elasticity of the spring; and
a pair of long guide slots parallelly provided at left and right sides of the long coupling slot, the guide portions of the upper member being respectively coupled to the long guide slots at corresponding positions.

4. The cosmetics case of claim 1, wherein the lower member further comprises a stand provided along a circumference of a side of the lower member and having ends rotatably coupled to central left and right sides of the lower member based on a length of the lower member, the stand being configured to be selectively rotated on the left and right sides in a direction outward from the lower member to support the cellular phone.

5. The cosmetics case of claim 1, wherein the upper member comprises a decorative character member selectively provided around the upper member.
